# EUROPEAN PATENT APPLICATION

(11) **EP 4 057 438 A1**
(43) Date of publication of application: **14.09.2022**
(21) Application number: 21740856.6
(22) Date of filing: 11.01.2021
(51) Int. Cl.: H01M 50/531, H01M 50/54, B21D 5/02, B21D 37/12

(54) **ELECTRODE TAB BENDING APPARATUS AND METHOD**

(30) Priority: 15.01.2020 KR 20200005638
(71) Applicant: LG Energy Solution, Ltd., Seoul 07335 (KR)
(72) Inventor: LI, Dai Hien, Daejeon 34122 (KR); HUH, Jun Hyeak, Daejeon 34122 (KR); MOON, Tae Young, Daejeon 34122 (KR); JUNG, Hyun Chul, Daejeon 34122 (KR)
(74) Representative: Plasseraud IP
(86) International application number: PCT/KR2021/000348
(87) International publication number: WO 2021/145624

(57) **Abstract**

A method for bending an electrode tab according to an embodiment of the present invention for solving the above problem includes: a step of stacking an electrode and an separator to manufacture an electrode assembly; a step of connecting an electrode lead to the electrode tab protruding from the electrode assembly; a step of primarily bending the electrode tab while a bending block disposed at one side of the electrode tab moves in a first direction that is directed toward the other side of the electrode tab; and a step of secondarily bending the electrode tab while the bending block moves in a second direction different from the first direction.

## Description

### CROSS-REFERENCE TO RELATED APPLICATION

The present application claims the benefit of the priority of Korean Patent Application No. 10-2020-0005638, filed on January 15, 2020, which is hereby incorporated by reference in its entirety.

### TECHNICAL FIELD

The present invention relates to an apparatus and method for bending an electrode tab, and more particularly, to an apparatus and method for bending an electrode tab, which are capable of V-forming an electrode tab while preventing the electrode tab from being damaged because it is unnecessary to allow a sharp knife to be in direct contact with the electrode tab.

### BACKGROUND ART

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, positive electrode active material slurry is applied to a positive electrode collector, and negative electrode active material slurry is applied to a negative electrode collector to manufacture a positive electrode and a negative electrode. Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

Such a secondary battery is classified into a pouch type secondary battery and a can type secondary battery according to a material of a battery case accommodating an electrode assembly. In the pouch type secondary battery, the electrode assembly is accommodated in a pouch made of a flexible polymer material having a variable shape. Also, in the can type secondary battery, an electrode assembly is accommodated in a case made of a metal or plastic material having a predetermined shape.

The pouch type battery case is manufactured by performing drawing molding on a pouch film having flexibility to form a cup part. The drawing molding is performed by inserting a pouch film into a press and applying a pressure to the pouch film through a punch to stretch the pouch film. In addition, when the cup part is formed, an electrode assembly is accommodated in an accommodation space of the cup part, and then, the battery case is folded to seal a sealing part, thereby manufacturing a secondary battery.

A plurality of electrodes are stacked in one electrode assembly, and an electrode tab is formed on each of the electrodes to easily supply electricity generated from the electrodes to the outside. In the electrode tabs, positive electrode tabs are in contact with each other, and negative electrode tabs are in contact with each other. Then, the positive electrode tabs and the negative electrode tabs are connected to one positive electrode lead and one negative electrode lead, respectively. Also, in order to improve energy efficiency to volume by minimizing a space occupied by the electrode tab when the electrode tab is inserted into the pouch-type battery case, V-forming is performed in the electrode tab.

The V-forming means bending of the electrode tab so that the electrode tab has a V shape as a whole. In general, a sharp knife is in contact with a position to be bent of the electrode tab so as to perform the V-forming. However, while the knife is in contact with the electrode tab, there is a problem that damage occurs, such as cracks in the electrode tab, and a plated, delamination of a plated metal film, or even disconnection of the electrode tab.

### DISCLOSURE OF THE INVENTION

### TECHNICAL PROBLEM

An object of the present invention for solving the above problem is to provide an apparatus and method for bending an electrode tab, which are capable of V-forming an electrode tab while preventing the electrode tab from being damaged because it is unnecessary to allow a sharp knife to be in direct contact with the electrode tab.

The objects of the present invention are not limited to the aforementioned object, but other objects not described herein will be clearly understood by those skilled in the art from descriptions below.

### TECHNICAL SOLUTION

A method for bending an electrode tab according to an embodiment of the present invention for achieving the above object includes: a step of stacking an electrode and an separator to manufacture an electrode assembly; a step of connecting an electrode lead to the electrode tab protruding from the electrode assembly; a step of primarily bending the electrode tab while a bending block disposed at one side of the electrode tab moves in a first direction that is directed toward the other side of the electrode tab; and a step of secondarily bending the electrode tab while the bending block moves in a second direction different from the first direction.

Also, in the step of secondarily bending the electrode tab, the second direction may be perpendicular to the first direction and be directed toward the electrode assembly.

Also, the method may further include, after the step of secondarily bending the electrode tab, a step of bending the electrode lead while a roller moves from the electrode assembly in a third direction that is directed toward the electrode lead.

Also, in the step of primarily bending the electrode tab, the bending block may move until a first surface facing the first direction reaches a position corresponding to a position at which the electrode lead is bent in the step of bending the electrode lead.

Also, in the step of bending the electrode lead, the roller may move in close contact with the first surface of the bending block with the electrode lead therebetween.

Also, in the step of bending the electrode lead, the first surface of the bending block may be formed to be flat.

Also, the method may further include, after the step of connecting the electrode lead and before the step of primarily bending the electrode tab, a step of bending the electrode lead while the roller moves in a fourth direction that is directed toward the electrode lead.

Also, in the step of bending the electrode lead, a second surface of the bending block, which faces an opposite side of the electrode assembly, may be disposed at a position corresponding to a position at which the electrode lead is bent.

Also, in the step of bending the electrode lead, the roller may move in close contact with the second surface of the bending block with the electrode lead therebetween.

Also, in the step of bending the electrode lead, the second surface of the bending block may be formed to be flat.

Also, in the step of primarily bending the electrode tab, the bending block may move until a first surface facing the first direction is in contact with one surface of the electrode lead.

Also, in the step of bending the electrode tab, an edge of the bending block, which is in contact with the electrode tab or the electrode lead, may be chamfered or filleted.

An apparatus for bending an electrode tab according to an embodiment of the present invention for achieving the above object includes: a bending block, which is disposed at one side of the electrode tab protruding from an electrode assembly to primarily bend the electrode tab while moving in a first direction that is directed toward the other side of the electrode tab and then to secondarily bend the electrode tab while moving in a second direction that is different from the first direction; and a roller configured to bend the electrode lead 12 while moving toward an electrode lead connected to the electrode tab.

Also, the roller may move after the bending block secondarily bends the electrode tab.

Also, when the roller bends the electrode lead, a first surface of the bending block, which faces the first direction, may be disposed at a position corresponding to a position at which the electrode lead is bent.

Also, the roller may move first before the bending block moves.

Also, when the roller bends the electrode lead, a second surface of the bending block, which faces an opposite side of the electrode assembly, may be disposed at a position corresponding to a position at which the electrode lead is bent.

Also, an edge of the bending block, which is in contact with the electrode tab or the electrode lead, may be chamfered or filleted.

Particularities of other embodiments are included in the detailed description and drawings.

### ADVANTAGEOUS EFFECTS

According to the embodiments of the present invention, there are at least the following effects.

Since the bending block moves linearly in the two directions to bend the electrode tab, the electrode tab may be V-formed while preventing the electrode tab from being damaged because it is unnecessary to allow the sharp knife to be in direct contact with the electrode tab.

The effects of the prevent invention are not limited by the aforementioned description, and thus, more varied effects are involved in this specification.

### BRIEF DESCRIPTION OF THE DRAWINGS

FIG. 1 is an assembly view of a secondary battery according to an embodiment of the present invention.
FIG. 2 is a flowchart illustrating a method for bending an electrode tab according to an embodiment of the present invention.
FIG. 3 is a schematic view illustrating a state in which a plurality of electrode tabs are in contact with each other according to an embodiment of the present invention.
FIG. 4 is a schematic view illustrating a state in which the plurality of electrode tabs are connected to each other according to an embodiment of the present invention.
FIG. 5 is a schematic view illustrating a state in which an electrode lead is connected to the electrode tabs according to an embodiment of the present invention.
FIG. 6 is a schematic view illustrating a state in which a bending block primarily bends the electrode tabs according to an embodiment of the present invention.
FIG. 7 is a schematic view illustrating a state in which the bending block secondarily bends the electrode tabs according to an embodiment of the present invention.
FIG. 8 is a schematic view illustrating a state in which a roller bends the electrode lead according to an embodiment of the present invention.
FIG. 9 is a flowchart illustrating a method for bending an electrode tab according to another embodiment of the present invention.
FIG. 10 is a schematic view illustrating a state in which a roller bends an electrode lead according to another embodiment of the present invention.
FIG. 11 is a schematic view illustrating a state in which a bending block primarily bends the electrode tabs according to another embodiment of the present invention.
FIG. 12 is a schematic view illustrating a state in which the bending block secondarily bends the electrode tabs according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "comprises" and/or "including" does not exclude other components besides a mentioned component.

Hereinafter, preferred embodiments will be described in detail with reference to the accompanying drawings.

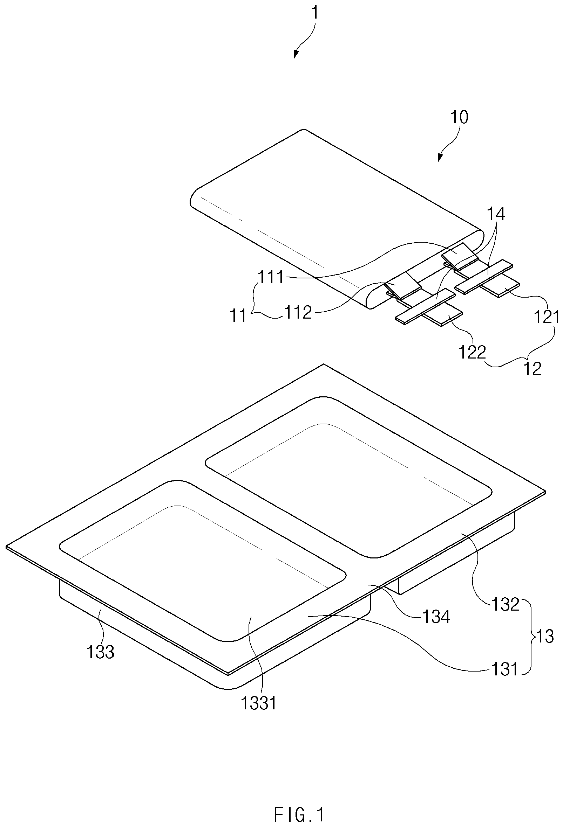

FIG. 1 is an assembled view of a secondary battery 1 according to an embodiment of the present invention.

As illustrated in FIG. 1, the pouch type secondary battery 1 according to an embodiment of the present invention includes an electrode assembly 10, in which electrodes such as a positive electrode and a negative electrode and separators are stacked, and a pouch type battery case 13 accommodating the electrode assembly 10 therein.

To manufacture the pouch type secondary battery 1, first, slurry in which an electrode active material, a binder, and a plasticizer are mixed with each other is applied to a positive electrode collector and a negative electrode collector to manufacture electrodes such as a positive electrode and a negative electrode. The electrodes are stacked on both sides of a separator to manufacture the electrode assembly 10 having a predetermined shape. Then, the electrode assembly 10 is inserted into the battery case 13, and the battery case 13 is sealed after injecting an electrolyte therein.

Particularly, the electrode assembly 10 may be a stacked structure including two types of electrodes such as a positive electrode and a negative electrode and a separator disposed between the electrodes to insulate the electrodes from each other or disposed at a left or right side of one electrode. The stacked structure may have various shapes without being limited in shape. For example, the cathode and the anode, each of which has a predetermined standard, may be stacked with the separator therebetween, or the stacked structure may be wound in the form of a jelly roll. Each of the two types of electrodes, i.e., the positive electrode and the negative electrode has a structure in which active material slurry is applied to the electrode collector having a metal foil or metal mesh shape. The slurry may be usually formed by agitating a granular active material, an auxiliary conductor, a binder, and a plasticizer with a solvent added. The solvent may be removed in the subsequent process.

As illustrated in FIG. 1, the electrode assembly 10 includes the electrode tabs 11. The electrode tabs 11 are respectively connected to a positive electrode and a negative electrode of the electrode assembly 10 to protrude to the outside of the electrode assembly 10, thereby providing a path, through which electrons are moved, between the inside and outside of the electrode assembly 10. An electrode collector of the electrode assembly 10 is constituted by a portion coated with an electrode active material and a distal end, on which the electrode active material is not applied, i.e., a non-coating portion. Also, each of the electrode tabs 11 may be formed by cutting the non-coating portion or by connecting a separate conductive member to the non-coating portion through ultrasonic welding. As illustrated in FIG. 1, the electrode tabs 11 may protrude from one side of the electrode assembly 10 in the same direction, but the present invention is not limited thereto. For example, the electrode tabs 11 may protrude in directions different from each other.

In the electrode assembly 10, the electrode lead 12 that supplies electricity to the outside of the secondary battery 1 is connected to the electrode tab 11 through spot welding. Also, a portion of the electrode lead 12 is surrounded by an insulating part 14. The insulation part 14 may be disposed to be limited within a sealing part 134, at which an upper case 131 and a lower case 132 of the battery case 13 are thermally fused, so that the electrode lead 12 is bonded to the battery case 13. Also, electricity generated from the electrode assembly 10 may be prevented from flowing to the battery case 13 through the electrode lead 12, and the sealing of the battery case 13 may be maintained. Thus, the insulation part 14 may be made of a nonconductor having non-conductivity, which is not electrically conductive. In general, although an insulation tape which is easily attached to the electrode lead 12 and has a relatively thin thickness is mainly used as the insulation part 14, the present invention is not limited thereto. For example, various members may be used as the insulation part 14 as long as the members are capable of insulating the electrode lead 12.

The electrode lead 12 includes a positive electrode lead 121 having one end connected to a positive electrode tab 111 to extend in a direction in which the positive electrode tab 111 protrudes and a negative electrode lead 122 having one end connected to a negative electrode tab 112 to extend in a direction in which the negative electrode tab 112 protrudes. On the other hand, as illustrated in FIG 1, all of the other ends of the positive electrode lead 121 and the negative electrode lead 122 protrude to the outside of the battery case 13. As a result, electricity generated in the electrode assembly 10 may be supplied to the outside. Also, since each of the positive electrode tab 111 and the negative electrode tab 112 is formed to protrude in various directions, each of the positive electrode lead 121 and the negative electrode lead 122 may extend in various directions.

The positive electrode lead 121 and the negative electrode lead 122 may be made of materials different from each other. That is, the cathode lead 121 may be made of the same material as the cathode collector, i.e., an aluminum (Al) material, and the anode lead 122 may be made of the same material as the anode collector, i.e., a copper (Cu) material or a copper material coated with nickel (Ni). Also, a portion of the electrode lead 12, which protrudes to the outside of the battery case 13, may be provided as a terminal part and electrically connected to an external terminal.

The battery case 13 is a pouch made of a material having flexibility, which accommodates the electrode assembly 10 therein. Hereinafter, the case in which the battery case 13 is the pouch will be described. When a pouch film 135 having flexibility is drawn by using a punch or the like, a portion of the pouch film 135 is stretched to form a cup part 133 including a pocket-shaped accommodation space 1331, thereby manufacturing the battery case 13. The battery case 13 accommodates the electrode assembly 10 so that a portion of the electrode lead 12, i.e., the terminal part is exposed and then is sealed. As illustrated in FIG. 1, the battery case 13 includes the upper case 131 and the lower case 132. An accommodation space 1331 in which a cup part 133 is formed to accommodate the electrode assembly 10 may be provided in the lower case 132, and upper case 131 may cover an upper side of the accommodation space 1331 so that the electrode assembly 10 is not separated to the outside of the battery case 13. Also, the sealing part 134 is sealed to seal the accommodation space 1331. Here, the cup part 133 having the accommodation part 1331 may be formed in the upper case 131 to accommodate the electrode assembly 10 in the upper portion. As illustrated in FIG. 1, one side of the upper case 131 and one side of the lower case 132 may be connected to each other. However, the present invention is not limited thereto. For example, the upper case 131 and the lower case 132 may be separately manufactured to be separated from each other.

When an electrode lead 12 is connected to the electrode tab 11 of the electrode assembly 10, and the insulation part 14 is provided on a portion of the electrode lead 12, the electrode assembly 10 may be accommodated in the accommodation space 1331 provided in the cup part 133 of the lower case 132, and the upper case 131 may cover the accommodation space from the upper side. Also, the electrolyte is injected, and the sealing part 134 extending outward from edges of the upper case 131 and the lower case 132 is sealed. The electrolyte may move lithium ions generated by electrochemical reaction of the electrode during charging and discharging of the secondary battery 1. The electrolyte may include a non-aqueous organic electrolyte that is a mixture of a lithium salt and a high-purity organic solvent or a polymer using a polymer electrolyte. The pouch type secondary battery 1 may be manufactured through the above-described method.

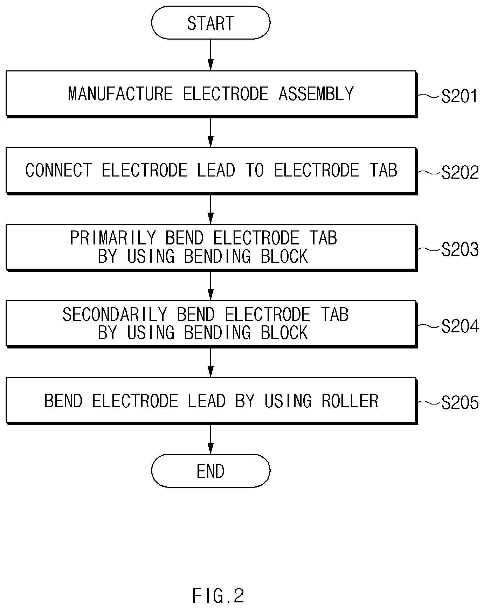

FIG. 2 is a flowchart illustrating a method for bending the electrode tab 11 according to an embodiment of the present invention.

According to an embodiment of the present invention, since a bending block 21 linearly moves in two directions to bend the electrode tab 11, the electrode tab may be V-formed while preventing the electrode tab from being damaged because it is unnecessary to allow the sharp knife to be in direct contact with the electrode tab.

Accordingly, a method for bending the electrode tab 11 according to an embodiment of the present invention includes: a step of stacking an electrode and an separator to manufacture an electrode assembly 10; a step of connecting an electrode lead 12 to the electrode tab 11 protruding from the electrode assembly 10; a step of primarily bending the electrode tab 11 while a bending block 21 disposed at one side of the electrode tab 11 moves in a first direction that is directed toward the other side of the electrode tab 11; and a step of secondarily bending the electrode tab 11 while the bending block 21 moves in a second direction different from the first direction. Also, the method may further include, after the step of secondarily bending the electrode tab 11, a step of bending the electrode lead 12 while a roller 22 moves from the electrode assembly 10 in a third direction that is directed toward the electrode lead 12.

Also, in order to perform the method for bending the electrode tab 11, provided are: the bending block 21, which is disposed at one side of the electrode tab 11 protruding from the electrode assembly 10 to primarily bend the electrode tab 11 while moving in the first direction that is directed toward the other side of the electrode tab 11 and then to secondarily bend the electrode tab 11 while moving in the second direction that is different from the first direction; and the roller 22 which bends the electrode lead 12 while moving toward the electrode lead 12 connected to the electrode tab 11. Also, the roller 22 may move after the bending block 21 secondly bends the electrode tab 11.

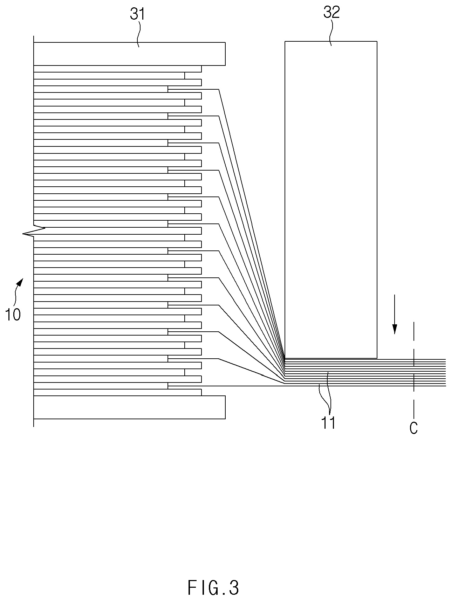

Hereinafter, contents of each step of the flowchart illustrated in FIG. 2 will be described with reference to FIGS. 3 to 7.

FIG. 3 is a schematic view illustrating a state in which the plurality of electrode tabs 11 are in contact with each other according to an embodiment of the present invention.

As described above, electrodes including a plurality of positive electrodes and negative electrodes and separators are alternately stacked to manufacture an electrode assembly 10 (S201). Also, in order to easily supply electricity generated from the electrodes to the outside, an electrode tab 11 is formed for each of the electrodes. The electrode tab 11 is formed to protrude outward from one side of the electrode assembly 10 and includes a positive electrode tab 111 protruding from the positive electrode and a negative electrode tab 112 protruding from the negative electrode.

When a plurality of positive and negative electrodes stacked on the electrode assembly 10 are formed, a plurality of electrode tabs 11 may also be formed. Thus, the electrode tabs 11 allow the positive electrode tabs 111 to contact each other so that the positive electrode tabs 111 are connected to each other and allow the negative electrode tabs 112 to contact each other so that the negative electrode tabs 112 are connected to each other. Here, as illustrated in FIG. 3, an electrode tab press 32 may press remaining electrode tabs 11 downward toward the electrode tab 11 disposed at the lowermost end to bend the electrode tabs 11 so that the electrode tabs 11 are in contact with each other. However, the present invention is not limited thereto. For example, the electrode tab press 32 may press remaining electrode tabs 11 upward toward the electrode tab 11 disposed at the uppermost end to bend the electrode tabs 11 so that the electrode tabs 11 are in contact with each other.

In order not to move other components of the electrode assembly 10, an electrode assembly fixing part 31 may press and fix the electrode assembly 10. Furthermore, even if the step of bending the electrode tab 11 and the electrode lead 12 is performed later, the electrode assembly fixing part 31 may press and fix the electrode assembly 10. After the plurality of electrode tabs 11 are in contact with each other and are arranged side by side, the electrode tabs 11 are cut along a cutting line C.

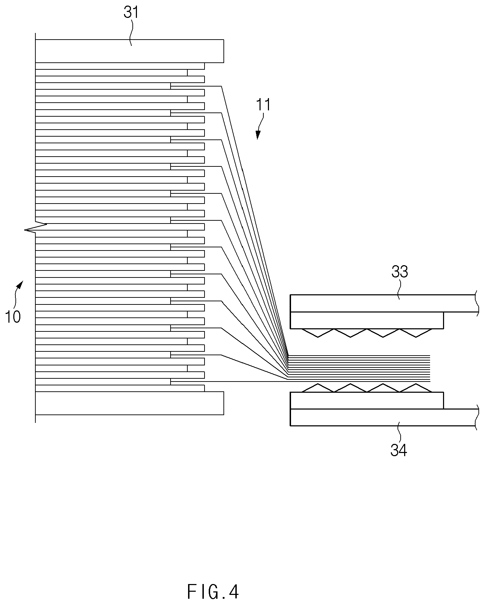

FIG. 4 is a schematic view illustrating a state in which the plurality of electrode tabs are connected to each other according to an embodiment of the present invention.

When performing ultrasonic welding on the plurality of electrode tabs 11, first, the plurality of electrode tabs 11 to be welded are mounted on a welding surface of an anvil 34, and then, as illustrated in FIG. 4, a pressure is applied to the electrode tabs 11 using a welding surface of a horn 33. Here, a plurality of protrusions are continuously arranged at a fixed order on the welding surface of the horn 33. The plurality of protrusions are embedded in the plurality of electrode tabs 11 to form patterns that are recessed in a shape corresponding to each of the protrusions in the outermost surface of the electrode tabs 11. Also, when ultrasonic waves having a high frequency of approximately 20 kHz are applied, vibration energy of the horn 33 and the anvil 34 is converted into thermal energy by friction to perform the welding.

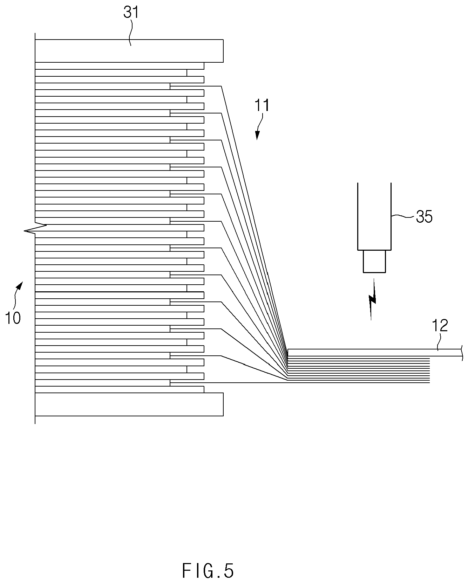

FIG. 5 is a schematic view illustrating a state in which the electrode lead 12 is connected to the electrode tabs 11 according to an embodiment of the present invention.

After the ultrasonic welding on the plurality of electrode tabs 11 is completed, one end of the electrode lead 12 is connected to the electrode tabs 11 (S202). For this, laser welding may be performed on the electrode tabs 11 and the electrode lead 12 using a laser generator 35 as illustrated in FIG. 5. That is, when the positive electrode tabs 111 are connected to each other, one end of the positive electrode lead 121 is connected to one surface of the positive electrode tab 111 through the laser welding, and when the negative electrode tabs 112 are connected to each other, one end of the negative electrode lead 122 is connected to one surface of the negative electrode tab 112 through the laser welding.

Here, after the electrode tabs 11 and the electrode lead 12 overlap each other, a laser having a high energy density is irradiated onto the electrode tabs 11 and the electrode lead 12. As a result, an interface between the electrode tab 11 and the electrode lead 12 is temporarily melted, and the melted portion is solidified again to be welded.

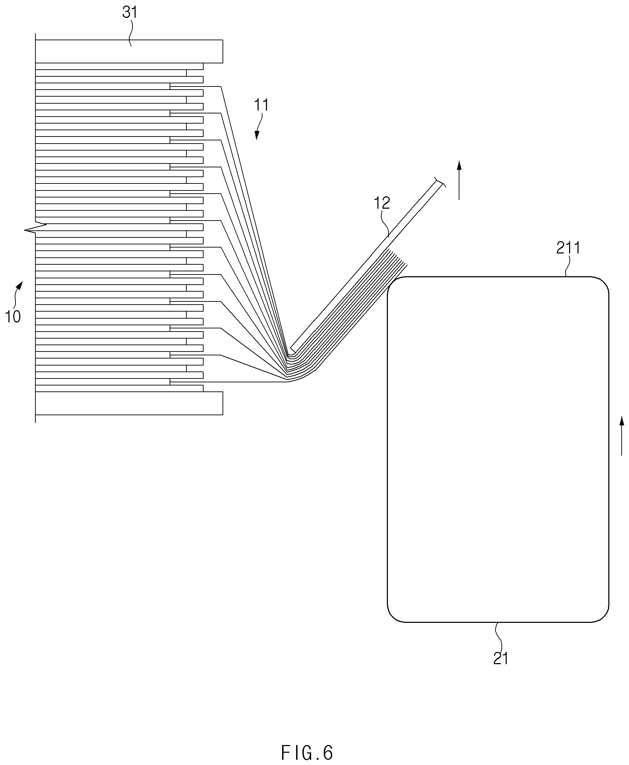

FIG. 6 is a schematic view illustrating a state in which the bending block primarily bends the electrode tabs according to an embodiment of the present invention.

After the electrode lead 12 is connected to the electrode tabs 11, the bending block 21 disposed at one side of the electrode tabs 11 moves in the first direction that is directed toward the other side of the electrode tabs 11 to primarily bend the electrode tabs 11 (S203). Hereinafter, it will be described that the electrode assembly 10 is disposed horizontally on the ground, the bending block 21 is disposed below the electrode tabs 11, and the first direction is upward. This is for convenience of description and is not intended to limit the scope of rights. That is, the present invention is not limited thereto. For example, the bending block 21 may be disposed above the electrode tabs 11, and the first direction may be downward, and furthermore, if the electrode assembly 10 is disposed perpendicular to the ground, the first direction may be left to right, or right to left.

As illustrated in FIG. 6, while the bending block 21 moves upward, a first surface 211 that faces the first direction, i.e., the upward direction pushes the electrode tab 11 upward. Then, the electrode tab 11 is bent to be inclined, and if the bending block 21 continuously moves upward, the inclination of the electrode tab 11 further increases. The bending block 21 continuously move upward until the first surface 211 reaches a position corresponding to a position at which the electrode lead 12 is to be bent later. Also, when the first surface 211 reaches the position corresponding to the position at which the electrode lead 12 is bent, the movement of the bending block 21 may be completed and stopped without moving any more.

If the electrode tab 11 is primarily bent upward while the bending block 21 moves upward, an edge of the bending block 21 may be in contact with the electrode tab 11 or the electrode lead 12. However, if the edge is sharp, there may still be a problem of damage such as an occurrence of cracking of the electrode tab 11 or the electrode lead 12 or delamination of a plated metal film.

Thus, the edge of the bent block 21, which is in contact with the electrode tab 11 or the electrode lead 12, may be chamfered or filleted. Thus, it is possible to prevent the problem, in which the electrode tab 11 or the electrode lead 12 is damaged.

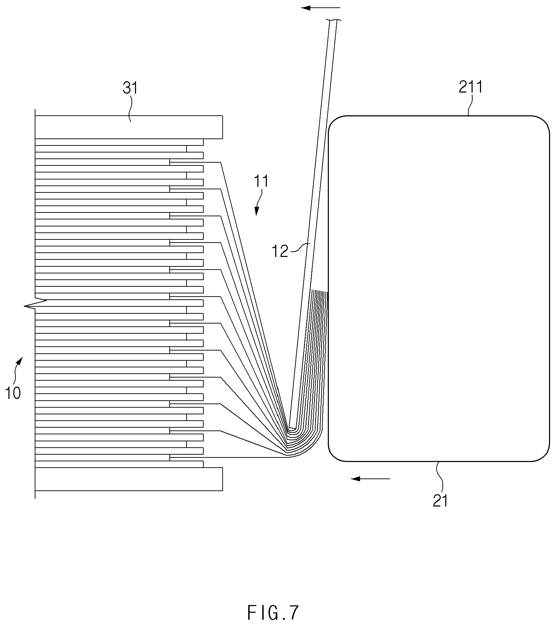

FIG. 7 is a schematic view illustrating a state in which the bending block secondarily bends the electrode tabs according to an embodiment of the present invention.

When the upward movement of the bending block 21 is completed, the moving direction may be changed, and the bending block 21 may move in the second direction different from the first direction. Also, as illustrated in FIG. 7, the bending block 21 secondarily bends the electrode tabs 11 (S204). Hereinafter, the second direction will be described as being perpendicular to the first direction and as a direction that is directed toward the electrode assembly 10. This is for convenience of description and is not intended to limit the scope of rights. That is, the present invention is not limited thereto. For example, the second direction includes various directions as long as the electrode tab 11 is capable of being secondarily bent, such as a diagonal direction between the first direction and the direction directed toward the electrode assembly 10.

As illustrated in FIG. 7, since the electrode tab 11 is already primarily bent, when the bending block 21 moves in the second direction, that is, in the direction directed toward the electrode assembly 10, the inclination of the electrode tab 11 further increases. Accordingly, V-forming, which is performed so that the electrode tab 11 has a V shape as a whole, is completed, a space occupied by the electrode tab 11 may be minimized, and energy efficiency to volume of the secondary battery 1 may be further improved.

In addition, since the bending block 21 linearly moves in two directions to bend the electrode tab 11, the electrode tab 11 may be V-formed while preventing the electrode tab 11 from being damaged because it is unnecessary to allow the sharp knife to be in direct contact with the electrode tab 11.

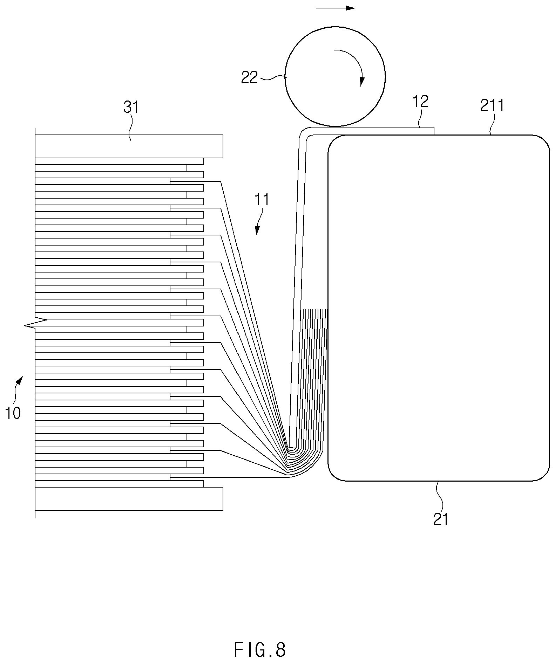

FIG. 8 is a schematic view illustrating a state in which the roller bends the electrode lead according to an embodiment of the present invention.

When the secondary bending of the electrode tab 11 is completed, as illustrated in FIG. 8, the roller 22 moves from the electrode assembly 10 to the electrode lead 12 in the third direction to bend the electrode lead 12 (S205). That is, according to an embodiment of the present invention, the roller 22 moves after the bending block 21 secondarily bends the electrode tab 11. Here, the third direction may be a direction that is opposite to the second direction, is perpendicular to the first direction, and faces the opposite side of the electrode assembly 10.

As described above, the first surface 211 of the bending block 21 is disposed at the position corresponding to the position at which the electrode lead 12 is bent. Therefore, when the roller 22 moves, it is preferable to move in close contact with the first surface 211 of the bending block 21 with the electrode lead 12 therebetween. For this, the first surface 211 of the bending block 21 may be formed to be flat, and thus, the roller 22 may easily come into close contact with the first surface 211 with the electrode lead 12 therebetween.

Since the electrode lead 12 is made of a metal as described above, the electrode lead 12 may have elasticity to some extent. Accordingly, after the roller 22 moves in the third direction, and the bending of the electrode lead 12 is completed, the electrode lead 12 may not be maintained to be in close contact with the first surface 211, but be inclined at a predetermined inclination. Thus, the roller 22 may be quite large and heavy. Furthermore, the roller 22 includes a heating coil to apply heat and a pressure to the electrode lead 12 together.

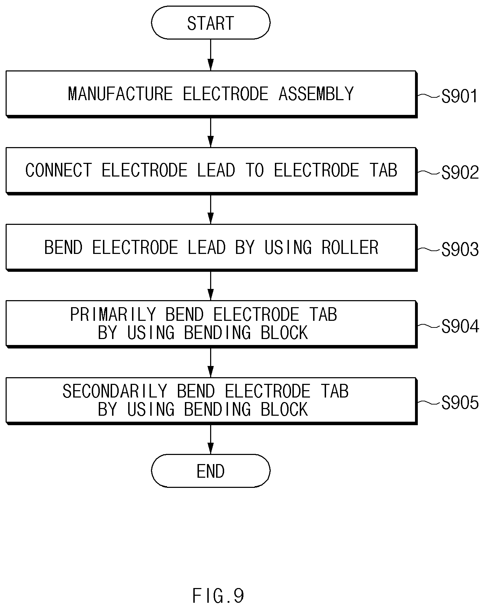

FIG. 9 is a flowchart illustrating a method for bending an electrode tab according to another embodiment of the present invention.

Accordingly, a method for bending the electrode tab 11 according to an embodiment of the present invention includes: a step of stacking an electrode and an separator to manufacture an electrode assembly 10; a step of connecting an electrode lead 12 to the electrode tab 11 protruding from the electrode assembly 10; a step of primarily bending the electrode tab 11 while a bending block 21 disposed at one side of the electrode tab 11 moves to the other side of the electrode tab 11; and a step of secondarily bending the electrode tab 11 while the bending block 21 moves toward the electrode tab 11. In addition, the method may further include, after the step of connecting the electrode lead 12 and before the step of primarily bending the electrode tab 11, a step of bending the electrode lead 12 while the roller 22a moves toward the electrode lead 12.

Also, an apparatus for bending an electrode tab, which performs the method for bending the electrode tab 11, includes: the bending block 21, which is disposed at one side of the electrode tab 11 protruding from the electrode assembly 10 to primarily bend the electrode tab 11 while moving toward the other side of the electrode tab 11 and then to secondarily bend the electrode tab 11 while moving toward the electrode tab 11; and the roller 22a which bends the electrode lead 12 while moving toward the electrode lead 12 connected to the electrode tab 11.d 12 connected to the electrode tab 11 and bending the electrode lead 12. In addition, the roller 22a may move first before the bending block 21 moves.

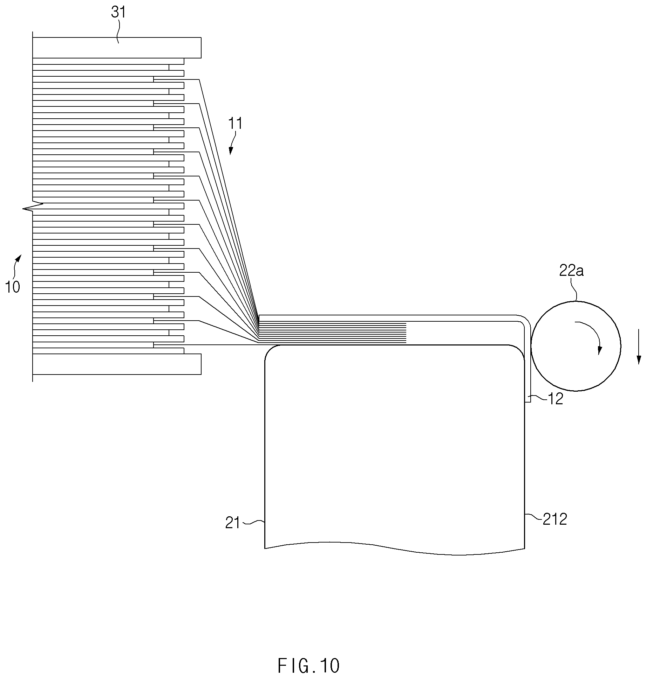

Hereinafter, contents of each step of the flowchart illustrated in FIG. 9 will be described with reference to FIGS. 10 to 12.

FIG. 10 is a schematic view illustrating a state in which the roller 22a bends the electrode lead 12 according to another embodiment of the present invention.

After the electrode assembly 10 is manufactured (S901), and the electrode lead 12 is connected to the electrode tab 11 (S902), the roller 22a moves in a fourth direction toward the electrode lead 12 to bend the electrode lead 12 (S903). That is, according to another embodiment of the present invention, the roller 22a moves first before the bending block 21 moves. Here, the fourth direction may be a direction opposite to the first direction in which the bending block 21 moves to primarily bend the electrode tab 11 later.

In the bending block 21, a second surface 212 facing an opposite side of the electrode assembly 10 is disposed at a position corresponding to a position at which the electrode lead 12 is bent. Therefore, when the roller 22a moves, it is preferable to move in close contact with the second surface 212 of the bending block 21 with the electrode lead 12 therebetween. For this, the second surface 212 of the bending block 21 may be formed to be flat, and thus, the roller 22a may easily come into close contact with the second surface 212 with the electrode lead 12 therebetween.

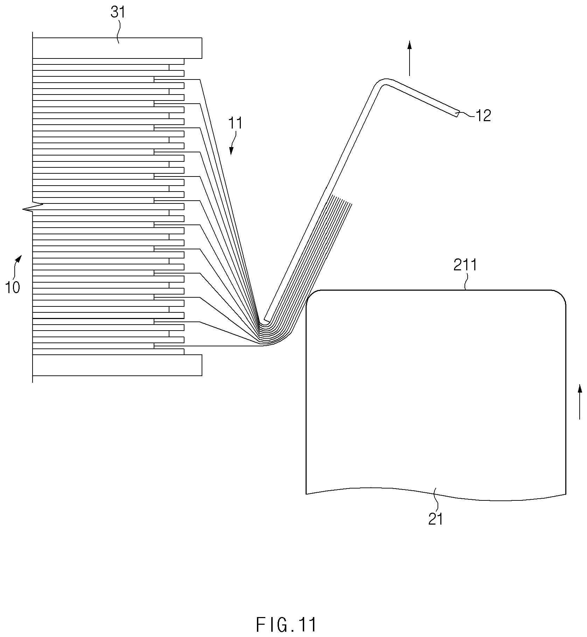

FIG. 11 is a schematic view illustrating a state in which the bending block 21 primarily bends the electrode tabs 11 according to another embodiment of the present invention.

After the electrode lead 12 is bent, the bending block 21 disposed at one side of the electrode tabs 11 moves in a first direction that is directed toward the other side of the electrode tabs 11 to primarily bend the electrode tabs 11 (S904). Hereinafter, the first direction will be described as being upward.

As illustrated in FIG. 11, while the bending block 21 moves upward, a first surface 211 that faces the first direction, i.e., the upward direction pushes the electrode tab 11 upward. Then, the electrode tab 11 is bent to be inclined, and if the bending block 21 continuously moves upward, the inclination of the electrode tab 11 further increases. The bending block 21 continuously moves upward until the first surface 211 is in contact with one surface of the electrode lead 12. Also, when the first surface 211 is in contact with one surface of the electrode lead 12, the movement of the bending block 21 may be completed and stopped without moving any more.

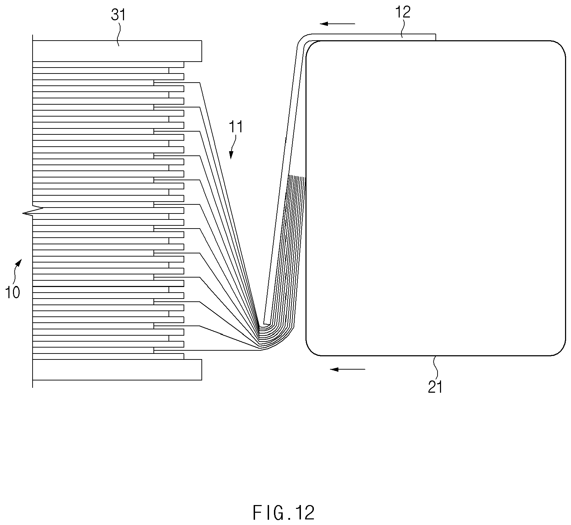

FIG. 12 is a schematic view illustrating a state in which the bending block secondarily bends the electrode tabs according to another embodiment of the present invention.

When the upward movement of the bending block 21 is completed, the moving direction may be changed, and the bending block 21 may move in the second direction different from the first direction. Also, as illustrated in FIG. 12, the bending block 21 secondarily bends the electrode tabs 11 (S905). Hereinafter, the second direction will be described as being perpendicular to the first direction and as a direction that is directed toward the electrode assembly 10.

As illustrated in FIG. 12, since the electrode tab 11 is already primarily bent, when the bending block 21 moves in the second direction, that is, in the direction directed toward the electrode assembly 10, the inclination of the electrode tab 11 further increases. Accordingly, V-forming, which is performed so that the electrode tab 11 has a V shape as a whole, is completed, a space occupied by the electrode tab 11 may be minimized, and energy efficiency to volume of the secondary battery 1 may be further improved.

In addition, since the bending block 21 linearly moves in two directions to bend the electrode tab 11, the electrode tab 11 may be V-formed while preventing the electrode tab 11 from being damaged because it is unnecessary to allow the sharp knife to be in direct contact with the electrode tab 11.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

### [Description of the Symbols]

| | | | |
|---|---|---|---|
| 1: | Secondary battery | 10: | Electrode assembly |
| 11: | Battery case | 12: | Electrode lead |
| 13: | Battery case | 14: | Insulating part |
| 21: | Bending block | 22: | Roller |
| 31: | Electrode assembly fixing part | 32: | Electrode tab press |
| 33: | Horn | 34: | Anvil |
| 35: | Laser generator | 111: | Positive electrode tab |
| 112: | Negative electrode tab electrode lead | 121: | Positive |
| 122: | Negative electrode lead | 131: | Upper case |
| 132: | Lower case | 133: | Cup part |
| 134: | Sealing part | 211: | First surface |
| 212: | Second surface | 1331: | Accommodation space |

## Claims

1. A method for bending an electrode tab, the method comprises:
a step of stacking an electrode and a separator to manufacture an electrode assembly;
a step of connecting an electrode lead to the electrode tab protruding from the electrode assembly;
a step of primarily bending the electrode tab while a bending block disposed at one side of the electrode tab moves in a first direction that is directed toward the other side of the electrode tab; and
a step of secondarily bending the electrode tab while the bending block moves in a second direction different from the first direction.

2. The method of claim 1, wherein, in the step of secondarily bending the electrode tab, the second direction is perpendicular to the first direction and is directed toward the electrode assembly.

3. The method of claim 2, further comprising, after the step of secondarily bending the electrode tab, a step of bending the electrode lead while a roller moves from the electrode assembly in a third direction that is directed toward the electrode lead.

4. The method of claim 3, wherein, in the step of primarily bending the electrode tab, the bending block moves until a first surface facing the first direction reaches a position corresponding to a position at which the electrode lead is bent in the step of bending the electrode lead.

5. The method of claim 4, wherein, in the step of bending the electrode lead, the roller moves in close contact with the first surface of the bending block with the electrode lead therebetween.

6. The method of claim 5, wherein, in the step of bending the electrode lead, the first surface of the bending block is formed to be flat.

7. The method of claim 2, further comprising, after the step of connecting the electrode lead and before the step of primarily bending the electrode tab, a step of bending the electrode lead while the roller moves in a fourth direction that is directed toward the electrode lead.

8. The method of claim 7, wherein, in the step of bending the electrode lead, a second surface of the bending block, which faces an opposite side of the electrode assembly, is disposed at a position corresponding to a position at which the electrode lead is bent.

9. The method of claim 8, wherein, in the step of bending the electrode lead, the roller moves in close contact with the second surface of the bending block with the electrode lead therebetween.

10. The method of claim 9, wherein, in the step of bending the electrode lead, the second surface of the bending block is formed to be flat.

11. The method of claim 8, wherein, in the step of primarily bending the electrode tab, the bending block moves until a first surface facing the first direction is in contact with one surface of the electrode lead.

12. The method of claim 1, wherein, in the step of bending the electrode tab, an edge of the bending block, which is in contact with the electrode tab or the electrode lead, is chamfered or filleted.

13. An apparatus for bending an electrode tab, the apparatus comprising:
a bending block, which is disposed at one side of the electrode tab protruding from an electrode assembly to primarily bend the electrode tab while moving in a first direction that is directed toward the other side of the electrode tab and then to secondarily bend the electrode tab while moving in a second direction that is different from the first direction; and
a roller configured to bend the electrode lead while moving toward an electrode lead connected to the electrode tab.

14. The apparatus of claim 13, wherein the roller moves after the bending block secondarily bends the electrode tab.

15. The apparatus of claim 14, wherein, when the roller bends the electrode lead, a first surface of the bending block, which faces the first direction, is disposed at a position corresponding to a position at which the electrode lead is bent.

16. The apparatus of claim 13, wherein the roller moves first before the bending block moves.

17. The apparatus of claim 16, wherein, when the roller bends the electrode lead, a second surface of the bending block, which faces an opposite side of the electrode assembly, is disposed at a position corresponding to a position at which the electrode lead is bent.

18. The apparatus of claim 13, wherein an edge of the bending block, which is in contact with the electrode tab or the electrode lead, is chamfered or filleted.
